# EUROPEAN PATENT APPLICATION

(11) **EP 3 327 340 A1**
(43) Date of publication of application: **30.05.2018**
(21) Application number: 17203508.1
(22) Date of filing: 24.11.2017
(51) Int. Cl.: F21V 8/00

(54) **THREE DIMENSIONAL (3D) BACKLIGHT UNIT, DISPLAY APPARATUS COMPRISING THE SAME, AND METHOD OF MANUFACTURING LIGHT GUIDE PLATE**

(30) Priority: 25.11.2016 KR 20160157940
(71) Applicant: Samsung Electronics Co., Ltd., Gyeonggi-do 16677 (KR)
(72) Inventor: CHOI, Yoonsun, 16678 Gyeonggi-do (KR); LEE, Jinho, 16678 Gyeonggi-do (KR); NAM, Dong Kyung, 16678 Gyeonggi-do (KR)
(74) Representative: Grünecker Patent- und Rechtsanwälte PartG mbB

(57) **Abstract**

A three-dimensional (3D) backlight unit and a display apparatus including the 3D backlight unit are provided. The 3D backlight unit may include a light source configured to emit light, and a light guide plate configured to guide the light emitted by the light source. The light guide plate may include output elements that allow a portion of the light guided by the light guide plate to be directed to exit the light guide plate, and a cross section of at least one of the output elements has an inverted trapezoid form. The output elements may allow a portion of light reflected from a lower surface of the light guide plate to an upper surface of the light guide plate to be directed to exit the light guide plate.

## Description

### BACKGROUND

### 1. Field

Methods and apparatuses consistent with exemplary embodiments in this disclosure relate to a three-dimensional (3D) backlight unit, a display apparatus including the same, and a method of manufacturing a light guide plate included in the 3D backlight unit.

### 2. Description of the Related Art

In a related art autostereoscopic three-dimensional (3D) display technology, flat panel displays (FPDs) may use an optical device, as for example a lenticular lens and a parallax barrier, to divide a viewpoint in front of the FPD. The FPDs using the lenticular lens separate a left eye image and a right eye image by disposing a plurality of cylinder lenses having relatively small pitches in front of a two-dimensional (2D) FPD, while the FPDs using the parallax barrier separate a left eye image and a right eye image by disposing a barrier that limits a progress direction of light in front of the FPD. A general structure of a parallax barrier includes a cover that covers an image light output from a 2D display panel and a slit that projects the image light which are alternately disposed to form a scattering pattern. When a viewer views a display apparatus at a predetermined position and in a predetermined direction, different viewpoint images are transferred to a left eye and a right eye of the viewer such that the viewer may experience a 3D effect due to a viewpoint difference caused by light scattered by the scattering pattern of the parallax barrier structure.

However, the scattering pattern may optically disturb a path of light of a 2D light source coming up from a lower portion, and thus, a brightness may be changed and the brightness is lack of uniformity.

### SUMMARY

Exemplary embodiments of the invention may address at least the above problems and/or disadvantages and other disadvantages not described above. Also, the exemplary embodiments are not required to overcome the disadvantages described above, and an example embodiment may not overcome any of the problems described above.

According to an aspect of an exemplary embodiment, ther is provided a three-dimensional (3D) backlight unit, comprising: a light source configured to emit light; and a light guide plate configured to guide the light emitted by the light source. The light guide plate comprises output elements that allow a portion of the light guided by the light guide plate to be directed to exit the light guide plate, and a cross section of at least one of the output elements has an inverted trapezoid form.

The output elements may allow the portion of the light reflected from a lower surface of the light guide plate to an upper surface of the light guide plate to exit the light guide plate towards a display panel.

The portion of the light directed to exit the light guide plate by the output elements may be reflected to a side surface of each of the output elements and may be directed to exit the light guide plate.

The light guide plate may comprise an upper surface at which a Total Internal Reflection (TIR) occurs.

The upper surface of the light guide plate and a lower surface of each of the output elements may be disposed on an identical plane.

The output elements may have an upper surface and the upper surface of each of the output elements may have a rectangle form, a trapezoid form or a parallelogram form.

The light guide plate may have an air cavity disposed between adjacent output elements among the output elements.

The light guided by the light guide plate may be guided by a Total Internal Reflection (TIR) occurring between a lower surface of the air cavity and a lower surface of the light guide plate.

The air cavity may have a permittivity less than a permittivity of the light guide plate.

The portion of the light directed to exit the light guide plate by the output elements may form a light pattern having a first area in which the portion of the light is present and a second area in which the portion of the light is absent are alternately repeated.

The output elements may be spaced apart from each other and form a plurality of output pattern columns disposed in a line form and each of the output pattern columns may comprise two or more independent output elements, among the output elements, that allow incident light to be directed to exit the light guide plate.

The output pattern columns may be disposed in a slanted form in the light guide plate.

An amount of the portion of the light directed to exit the light guide plate may be determined based on an area of a lower surface of each of the output elements.

The light source may comprise a first light source configured to emit the light toward one side of the light guide plate; and a second light source configured to emit the light toward another side of the light guide plate.

According to an aspect of another embodiment, there is provided a display apparatus comprising: a display panel, a first backlight unit configured to output first light for displaying a three-dimensional (3D) image to the display panel in a 3D display mode and a second backlight unit configured to output second light for displaying a two-dimensional (2D) image to the display panel in a 2D display mode.

The first backlight unit is configured to output the first light for displaying the 3D image through output elements, and a cross section of at least one of the output elements may have an inverted trapezoid form.

The first backlight unit may comprise a light guide plate having the output elements, and the output elements may allow a portion of light reflected from a lower surface of the light guide plate to an upper surface of the light guide plate to be directed to exit the light guide plate.

The portion of the light directed to exit the light guide plate by the output elements may be reflected to a side surface of each of the output elements and may be directed to exit the light guide plate.

The light output from the second backlight unit may reach the display panel by passing through the output elements and the light guide plate included in the first backlight unit.

The display panel may be spaced apart from the first backlight unit or is optically bonded to the first backlight unit.

The display apparatus may further comprise a controller configured to control operations of light sources included in the first backlight unit and the second backlight unit based on a display mode of the display apparatus.

According to an aspect of another embodiment, there is provided a method for manufacturing a light guide plate. The method comprises forming a first plate having an initial pattern; and forming a light guide plate having output elements by bonding the initial pattern of the first plate to a second plate. According to the method, a cross section of at least one of the output elements has an inverted trapezoid form. The cross section of the initial pattern may have a triangle form or a trapezoid form.

The method may further comprise forming an air cavity in a space in which the first plate and the second plate are not bonded.

The forming the first plate may comprise casting, using an intaglio mold, the first plate having the initial pattern corresponding to an intaglio pattern of the intaglio mold.

According to an aspect of another embodiment, there is provided a light guide plate comprising a lower portion configured to guide the light; and an upper portion comprising a plurality of protrusions bonded to the lower portion. The plurality of protrusions is configured to allow a portion of the light guided by the lower portion to exit light guide plate, and a cross section of at least one of the plurality of protrusions may has an inverted trapezoid form.

The plurality of protrusions may be formed at uniform intervals, at least one of the plurality of protrusions may be an inverted trapezoidal prism and air cavity may be formed between adjacent protrusions among the plurality the protrusions.

According to an aspect of another embodiment, there is provided a method of manufacturing a light guide plate, the method comprises forming a first plate having a plurality of protrusions and bonding the plurality of protrusions to a second plate to form a light guide plate for guiding light.

The plurality of protrusions allow a portion of the guided light to exit light guide plate, and a cross section of at least one of the plurality of protrusions has an inverted trapezoid form.

The method of manufacturing the light guide plate may further comprise forming the plurality of protrusions at uniform intervals, at least one of the plurality of protrusions may be an inverted trapezoidal prism and an air cavity is formed between adjacent protrusions among the plurality the protrusions.

### BRIEF DESCRIPTION OF THE DRAWINGS

The above and/or other aspects will be made more apparent and more readily appreciated from the following description of exemplary embodiments with reference to the accompanying drawings, in which:
FIG. 1 is a block diagram illustrating a display apparatus according to an exemplary embodiment;
FIG. 2A illustrates a process in which light for a three-dimensional (3D) image is output through a 3D backlight unit according to an exemplary embodiment;
FIG. 2B illustrates a light guide plate of the 3D backlight unit according to an exemplary embodiment;
FIG. 3 illustrates a structure of an output structure according to an exemplary embodiment;
FIG. 4 illustrates an example of a distribution of output patterns according to an exemplary embodiment;
FIG. 5 illustrates a pattern column included in a distribution of output patterns according to an exemplary embodiment;
FIG. 6 illustrates a light distribution output from a three-dimensional (3D) backlight unit according to an exemplary embodiment;
FIG. 7 illustrates a distribution of output patterns according to another exemplary embodiment;
FIG. 8 illustrates an output pattern in a line form according to an exemplary embodiment;
FIG. 9A illustrates an operation of a display apparatus in a three-dimensional (3D) display mode according to an exemplary embodiment;
FIG. 9B illustrates an operation of a display apparatus in a two-dimensional (2D) display mode according to an exemplary embodiment;
FIG. 10A is a flowchart illustrating a method of manufacturing a light guide plate according to an exemplary embodiment;
FIG. 10B is a flowchart illustrating a method of manufacturing a light guide plate according to another exemplary embodiment; and
FIG. 11 illustrates an implementation of a method of manufacturing a light guide plate according to an exemplary embodiment.

### DETAILED DESCRIPTION

Hereinafter, specific structural or functional descriptions of examples provided in the present disclosure are exemplary to merely describe the examples. The examples may be modified and implemented in various forms, and the scope of the examples is not limited to the descriptions provided in the present specification.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element. As used herein, the term "and/or," includes any and all combinations of one or more of the associated listed items.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

Hereinafter, reference will now be made in detail to examples with reference to the accompanying drawings, wherein like reference numerals refer to like elements throughout.

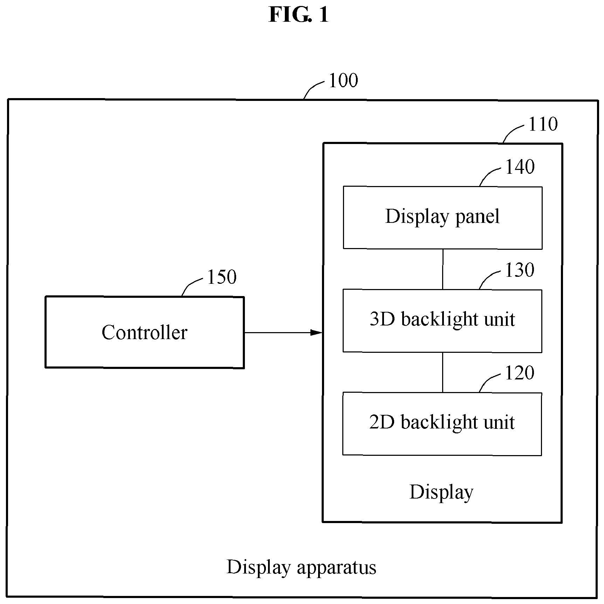

FIG. 1 is a block diagram illustrating a display apparatus 100 that displays an image according to an exemplary embodiment.

According to the exemplary embodiment, the display apparatus 100 may operate in a three dimensional (3D) display mode in which a 3D image is output or a two-dimensional (2D) display mode in which a 2D image is output. In another exemplary embodiment, the display apparatus 100 may operate only in the 3D display mode. The display apparatus 100 may implement an autostereoscopic 3D display without using a lenticular lens or a parallax barrier.

Referring to FIG. 1, the display apparatus 100 includes a display 110 and a controller 150. The controller 150 may be implemented in the form of a software or hardware. The display 110 outputs a 3D image or a 2D image to be provided for a viewer under a control of the controller 150. The display 110 includes a 2D backlight unit 120, a 3D backlight unit 130, and a display panel 140. When the display apparatus 100 operates in the 3D display mode and the 2D display mode, the display 110 includes the 2D backlight unit 120, the 3D backlight unit 130, and the display panel 140. When the display apparatus 110 operates only in the 3D display mode, the display 110 includes the 3D backlight unit 130 and the display panel 140, and the 2D backlight unit 120 is omitted.

The 3D backlight unit 130 outputs light for displaying a 3D image to the display panel 140 in the 3D display mode. The 3D backlight unit 130 includes a light source configured to emit light and a light guide plate configured to guide the light emitted from the light source. The light guide plate has output elements that allow a portion of the guided light to be directed to exit the light guide plate. In an exemplary embodiment, the 3D backlight unit 130 outputs the light for displaying the 3D image to the display panel 140 through at least one of the output elements, and a cross section of one of the output elements has an inverse trapezoid form. The output elements may allow a portion of light reflected from a lower surface of the light guide plate to an upper surface of the light guide plate to be directed to exit the light guide plate towards the display panel 140. Light that enters the output elements through a lower surface of each of the output elements may be reflected by a side surface of each of the output elements to be directed to exit the light guide plate.

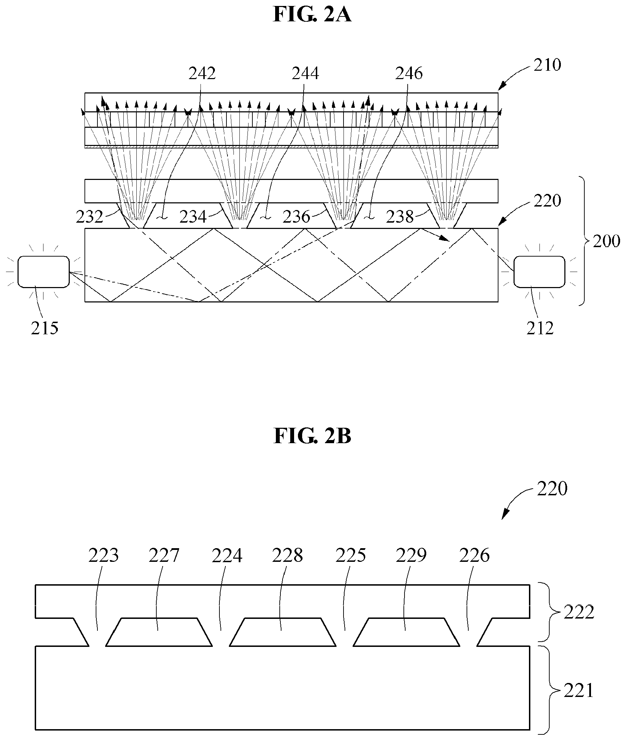

The portion of the light directed to exit the light guide plate by the output elements forms a light pattern having a first area in which the light is present and a second area in which the light is absent are alternately repeated. According to an exemplary embodiment, a light distribution pattern formed by the output elements is functionally identical to a light pattern formed by a 3D optical element, for example, a parallax barrier. In the light pattern formed by the output elements, the first area and the second area may correspond to an area in which the light is present through a slit of the parallax barrier and an area in which the light is blocked by a barrier, respectively. Detailed description of the 3D backlight unit 130 is provided below with reference to FIG. 2A.

According to an exemplary embodiment, the 2D backlight unit 120 outputs light for displaying a 2D image to the display panel 140 in the 2D display mode. In an example, similar to the 3D backlight unit 130, the 2D backlight unit 120 includes a light source configured to emit light and a light guide plate configured to guide the light emitted from the light source. In an example, output elements that allow the light to be directed to exit the light guide plate of the 2D backlight unit 120 may be disposed at a lower surface of the light guide plate, and the light may be uniformly output to the outside of the light guide plate by the output elements.

In an example, the 2D backlight unit 120 may be disposed at a lower portion of the 3D backlight unit 130, and the 3D backlight unit 130 may be disposed at a lower portion of the display panel 140. The light output from the 2D backlight unit 120 may reach the display panel 140 by passing through the output elements and the light guide plate included in the 3D backlight unit 130. According to an exemplary embodiment, the output elements and the light guide plate included in the 3D backlight unit 130 are made of transparent materials, for example, Poly Methyl Methacrylate (PMMA), PolyEtherSulfone (PES), or Poly Carbonate (PC), and as such, a path of the light output from the 2D backlight unit 120 may be optically undisrupted. Thus, the light output from the 2D backlight unit 120 may be uniformly provided for the display panel 140.

The display panel 140 displays an image to be provided for a viewer based on the light output from the 3D backlight unit 130 or the 2D backlight unit 120. A 3D image may be formed in response to the light output from the 3D backlight unit 130 passing through the display panel 140. A 2D image may be formed in response to the light output from the 2D backlight unit 140 passing through the 3D backlight unit 130 and the display panel 140.

For example, the display panel 140 may be a liquid crystal display (LCD) panel having subpixels disposed in a form of a matrix. The display panel 140 may be disposed to be spaced apart from the 3D backlight unit 130, or the display panel 140 may be optically bonded to the 3D backlight unit 130. To enhance image quality of a 3D display and a uniformity of the image quality, according to an exemplary embodiment, a predetermined gap between the output elements included in the 3D backlight unit 130 and the display panel 140 may be maintained. For exemplary, a method of maintaining the predetermined gap may include a method of bonding the display panel 140 to the light guide plate of the 3D backlight unit 130. The 3D backlight unit 130 may be bonded to the display panel 140 due to a unique structural feature of an output pattern of the 3D backlight unit 130. When the 3D backlight unit 130 is optically bonded to the display panel 130, the display apparatus 100 may be relatively thin and a crosstalk phenomenon may be reduced.

According to an exemplary embodiment, the controller 150 may control entire operation of the display apparatus 100. The controller 150 may control operations of light sources included in the 3D backlight unit 130 and the 2D backlight unit 120 based on a display mode of the display apparatus 100. For example, in the 3D display mode, the light sources included in the 3D backlight unit 130 are activated and the light sources included in the 2D backlight unit 120 are deactivated. In the 2D display mode, the light sources included in the 3D backlight unit 130 are deactivated and the light sources included in the 2D backlight unit 120 are activated. The display mode may be determined based on whether an image to be output or determined by a user input is a 2D image or a 3D image.

FIG. 2A illustrates a cross sectional view of a 3D backlight unit and a process in which light for a three-dimensional (3D) image is output through the 3D backlight unit according to an example embodiment.

Referring to FIG. 2A, a 3D backlight unit 200 includes light sources 212 and 215 and a light guide plate 220. Here, the 3D backlight unit 200 may correspond to the 3D backlight unit 130 of FIG. 1. According to an exemplary embodiment, the light sources 212 and 215 may be light emitting diodes (LEDs), linear light sources, or surface light sources. Each of the light sources 212 and 215 may be provided as a plurality of light sources. In an exemplary embodiment, the light sources 212 and 215 include the first light source 212 configured to emit light toward one side of the light guide plate 220 and the second light source 215 configured to emit the light toward another side of the light guide plate 220. For example, in a 3D display mode, any one of the first light source 212 and the second light source 215 may be activated or both the first light source 212 and the second light source 215 may be activated.

The light guide plate 220 guides light incident from the light sources 212 and 215 through a Total Internal Reflection (TIR). The light guide plate 220 includes output elements 232, 234, 236, and 238 that allow a portion of the guided light to be directed to exit the light guide plate 220. For example, each of the output elements 232, 234, 236, and 238 has structure that allow a portion of the guided light to be directed to exit the light guide plate 220. A refractive index of each of the output elements 232, 234, 236, and 238 may have a value for breaking the TIR at a lower surface of each of the output elements 232, 234, 236, and 238. The refractive index of each of the output elements 232, 234, 236, and 238 may be identical or similar to a refractive index of the light guide plate 220.

In an example, in the light guide plate 220, an upper surface at which the TIR occurs and the lower surface of each of the output elements 232, 234, 236, and 238 are disposed on an identical plane. FIG. 2A illustrates cross sections of the output elements 232, 234, 236, and 238. One cross section of at least one of the output elements 232, 234, 236, and 238 may have an inverted trapezoid form. A viewing angle of an image output through a display panel 210 may be determined based on structures of the output elements 232, 234, 236, and 238. An autostereoscopic 3D display apparatus includes a viewing angle for viewing a 3D image, and the viewing angle may be determined by light having a maximum reflection angle among lights reflected by a side surface of each of the output elements 232, 234, 236, and 238.

A portion of the light reflected from a lower surface of the light guide plate 220 to an upper surface of the light guide plate 220 may be incident on the output elements 232, 234, 236, and 238 through the lower surface of each of the output elements 232, 234, 236, and 238. The light incident on the output elements 232, 234, 236, and 238 may be reflected (that is, TIR occurs) by the side surface of each of the output elements 232, 234, 236, and 238 on which the light is incident and then proceed to the outside of the light guide plate 220. An amount of light directed to exit the light guide plate 220 may be determined based on an area of the lower surface of each of the output elements 232, 234, 236, and 238. As the area of the lower surface of the output element increases, the amount of light directed to the outside of the light guide plate 220 increases.

According to an exemplary amendment, air cavities 242, 244, and 246 are disposed between the output elements 232, 234, 236, and 238. The output elements 232, 234, 236, and 238 are disposed to be spaced apart from each other between the air cavities 242, 244, and 246. A cross section of each of the air cavities 242, 244, and 246 may have a trapezoid form. Light may be guided by the TIR of the light occurring between a lower surface of each of the air cavities 242, 244, and 246 and the lower surface of the light guide plate 220. Here, a TIR condition may be determined based on the refractive index of the light guide plate 220 and a refractive index of each of the air cavities 242, 244, and 246. In an exemplary embodiment, the refractive index of each of the air cavities 242, 244, and 246 may be less than the refractive index of the light guide plate 220.

The display panel 210 may be spaced apart from the light guide plate 220, or may be optically bonded to the light guide plate 220. A display panel may not be bonded to a light guide plate in the related display apparatus, because a TIR condition would not be satisfied. However, according to an exemplary embodiment of the present disclosure, a structure of the 3D backlight unit 200 may enable the TIR to occur in the light guide plate 210 because of the air cavities 242, 244, and 246, even when the display panel 210 is bonded to the light guide plate 220. Thus, the display apparatus may normally operate even when the display panel 210 is bonded to the light guide plate 220.

FIG. 2B illustrates a cross sectional view of a light guide plate 220. According to an exemplary embodiment, the light guide plate 220 includes a lower portion 221 and an upper portion 222 including a plurality of protrusions (223, 224, 225 and 226) bonded to the lower portion 221. The plurality of protrusions (223, 224, 225 and 226) are configured to allow a portion of the light guided by the lower portion 221 to exit light guide plate 220, and a cross section of at least one of the plurality of protrusions (223, 224, 225 and 226) having an inverted trapezoid form.

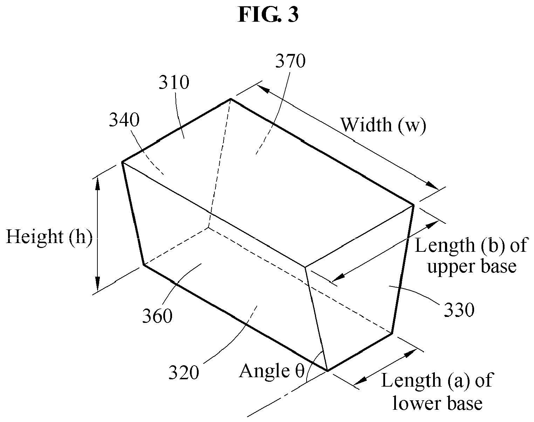

According to an exemplary embodiment, at least one of the plurality of protrusions is an inverted trapezoidal prism. Also, air cavity (227, 228 and 229) may be formed between adjacent protrusions among the plurality the protrusions. The plurality of protrusions may be formed at uniform intervals. FIG. 3 illustrates a structure of an output element according to an exemplary embodiment.

Referring to FIG. 3, cross sections 330 and 340 of each output element in a direction of a height h may have inverted trapezoid forms. In each of the cross sections 330 and 340 of an output element, a length b of an upper base is greater than a length a of a lower base, and an angle θ may be, for example, 50° through 60°. According to an exemplary embodiment, the angle θ is the angle between a side of the inversed trapezoid form and a line extending parallel from the lower base. A reflection angle of light output through the output element may be determined based on a size of the angle θ.

In response to light guided in a light guide plate being incident on a lower surface 320 of the output element, the light may enter the output element and may be reflected by at least one of side surfaces 360 and 370 by passing through an upper surface 310. Here, a reflection angle of the reflected light may be determined based on the angle θ. An amount of the light output from the output element may be different depending on an area of the lower surface 320. The area of the lower surface 320 may be determined based on the length and a width w. The upper surface 310 may be one of various forms. For example, the upper surface 310 may have a rectangle form, a trapezoid form (or inverted trapezoid form), or a parallelogram form, but the form of the upper surface 310 is not limited thereto. According to an exemplary embodiment, the output element may be an inverse trapezoidal prism.

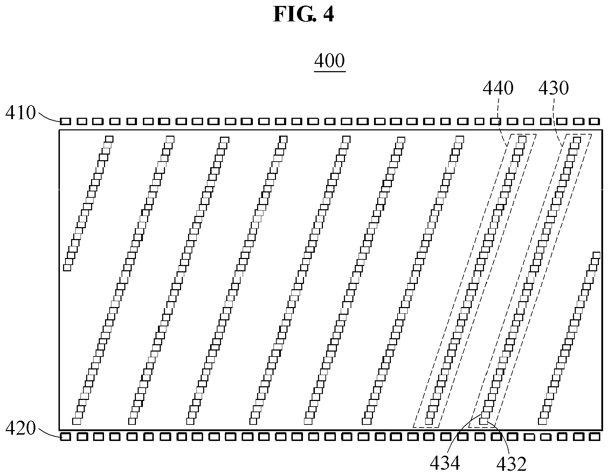

FIG. 4 illustrates an example of a distribution of output patterns according to an exemplary embodiment.

Referring to FIG. 4, a first light source 410 of a three-dimensional (3D) backlight unit 400 is disposed on one side of a light guide plate, and a second light source 420 of the 3D backlight unit 400 is disposed on another side of the light guide plate. Light emitted from the first light source 410 and the second light source 420 is incident on the light guide plate and a portion of incident light is directed to exit the light guide plate to be outside of the light guide plate by output patterns (i.e., 430 and 440) formed by the output elements (i.e., 432 and 434).

The output patterns may include a plurality of pattern columns 430 and 440 in the light guide plate of the 3D backlight unit 400. The pattern columns 430 and 440 may be spaced apart from each other by an air cavity that is disposed between the pattern columns 430 and 440. The pattern columns 430 and 440 may be disposed in a slanted form in the light guide plate. By disposing the pattern columns 430 and 440 in the slanted form, quality of a 3D image output through a display panel may be enhanced.

Each of the pattern columns 430 and 440 includes a plurality of independent output element structures 432 and 434 having island forms. Each of the output element structures 432 and 434 may allow the incident light to be directed to the outside of the light guide plate. The output element structures 432 and 434 may be disposed to be spaced apart from each other and may be disposed in a line form in the pattern column 430.

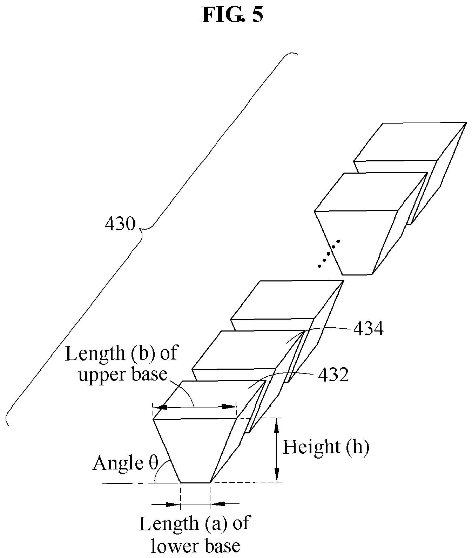

FIG. 5 illustrates a pattern column included in an output pattern according to an exemplary embodiment.

Referring to FIG. 5, the pattern column 430 included in the output pattern includes the plurality of output element structures 432 and 434. An air cavity may exist between the output element structures 432 and 434. A length b of an upper base is greater than a length of a lower base of one surface of each of the output element structures 432 and 434. One surface of each of the output element structures 432 and 434 may have an inverse trapezoid form in a direction of a height h. A reflection angle of light output from the output element structures 432 and 434 may be determined based on a size of an angle θ of each of the output element structures 432 and 434.

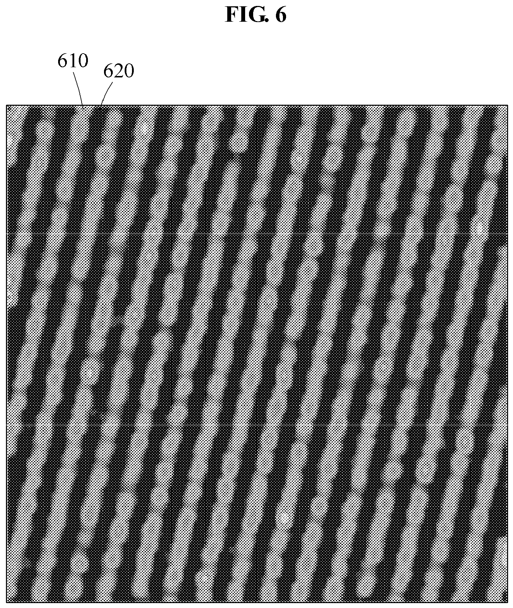

FIG. 6 illustrates a light distribution output from a three-dimensional (3D) backlight unit according to an exemplary embodiment.

Referring to FIG. 6, in response to output elements arranged to form a plurality of pattern columns in a line form, the light distribution output from the 3D backlight unit includes a first area 610 in which light is present and a second area 620 in which the light is absent. Here, the second area 620 is a relatively dark area because the light is absent from the second area 620. The first area 610 is a relatively bright area formed by light directed to an outside of a light guide plate by the output elements. The first area 610 and the second area 620 may indicate a light pattern that is alternately repeated in a line form. According to an exemplary embodiment, the light distribution output from the 3D backlight unit may have a form similar to that of a light distribution formed by a parallax barrier.

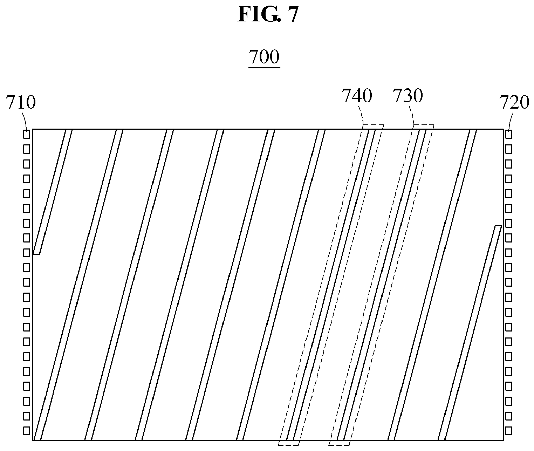

FIG. 7 illustrates a distribution of output patterns according to another exemplary embodiment.

Referring to FIG. 7, a first light source 710 of a three-dimensional (3D) backlight unit 700 is disposed on one side of a light guide plate and a second light source 720 of the 3D backlight unit 700 is disposed on another side of the light guide plate. Light emitted from the first light source 710 and the second light source 720 is incident on the light guide plate and a portion of the incident light is directed to exit the light guide plate to an outside of the light guide plate by output patterns. Here, the light guide plate includes output elements 730 and 740 in a line form. Each of the output elements 730 and 740 may be formed as a single column. The output elements 730 and 740 may be disposed to be spaced apart from each other and may be disposed in a slanted form. An air cavity may be disposed between the output elements 730 and 740. A total internal reflection (TIR) may occur in light emitted from the first light source 710 and the second light source 720 and incident on the light guide plate by the air cavity. The light incident on the output elements 730 and 740 may be reflected by a side surface of each of the output elements 730 and 740 and may be directed to exit the light guide plate to the outside of the light guide plate.

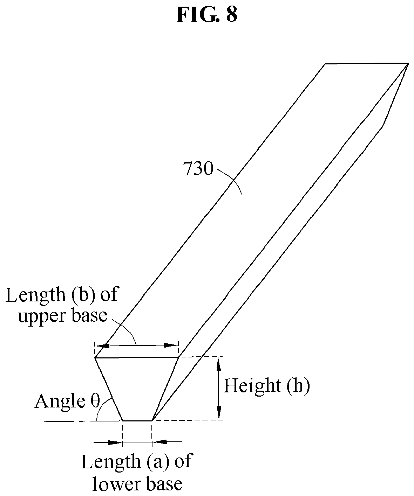

FIG. 8 illustrates an output pattern in a line form according to an exemplary embodiment.

Referring to FIG. 8, the output element 730 may have a long line form. A cross section of the output element 730 may have an inverse trapezoid form in which a length b of an upper base is longer than a length of a lower base in a direction of a height h. An angle θ may be, for example, 50° through 60°. According to an exemplary embodiment, the angle θ is the angle between a side of the inversed trapezoid form and a line extending parallel from the lower base. A reflection angle of light output through the output element 730 may be determined based on a size of the angle θ.

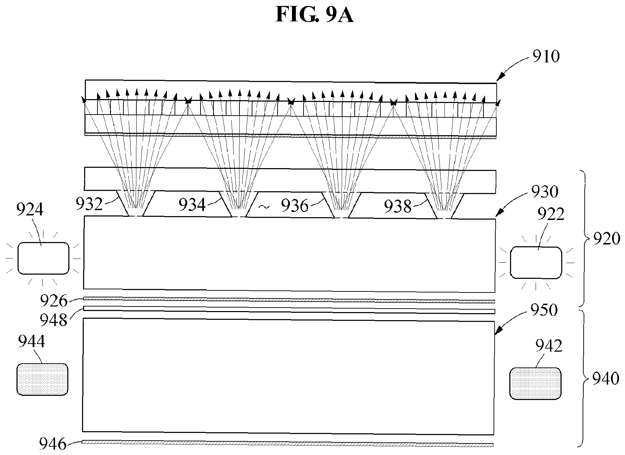

FIG. 9A illustrates an operation of a display apparatus in a three-dimensional 3D display mode according to an exemplary embodiment.

Referring to FIG. 9A, a display apparatus, for example, the display apparatus 100 of FIG. 1, includes a display panel 910, a 3D backlight unit 920, and a two-dimensional 2D backlight unit 940. The 3D backlight unit 920 is disposed on an upper portion of the 2D backlight unit 940 and the display panel 910 is disposed on an upper portion of the 3D backlight unit 920.

In response to the display apparatus operating in a 3D display mode, the 3D backlight unit 920 is activated and light is emitted from light sources 922 and 924 included in the 3D backlight unit 920 to a light guide plate 930. The 2D backlight unit 940 is deactivated and light is not emitted from light sources 942 and 944 included in the 2D backlight unit 940.

Light emitted from the light sources 922 and 924 and incident on the light guide plate 930 may be guided by a total internal reflection (TIR) in the light guide plate 930. The light guide plate 930 includes output elements 932, 934, 936, and 938 that allow light to be directed to exit the light guide plate 930 towards the display panel 910. A cross section of at least one of the output elements 932, 934, 936, and 938 may have an inverted trapezoid form. For example, in response to light that progresses to the light guide plate 930 reaching a lower surface of the output elements 932, the light may be incident on the output elements 932 and reflected by one side surface of the output pattern 932 and then the light may be directed to exit the light guide plate 930 towards the display panel 910. The display panel 910 displays a 3D image based on a light pattern formed by the output pattern 932.

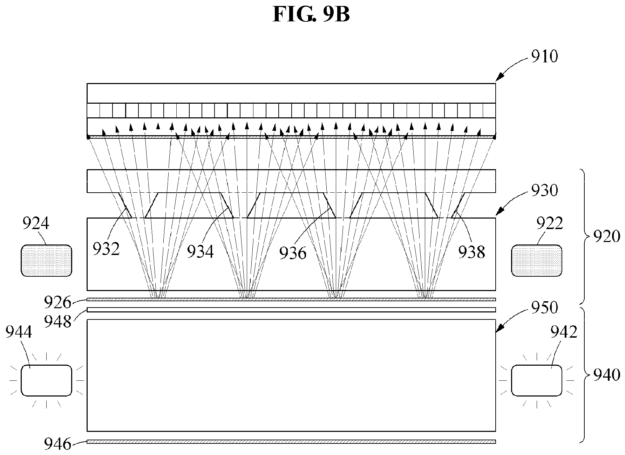

FIG. 9B illustrates an operation of a display apparatus in a two-dimensional (2D) display mode according to an exemplary embodiment.

Referring to FIG. 9B, in response to the display apparatus operating in the 2D display mode, the 2D backlight unit 940 is activated and light is emitted from the light sources 942 and 944 included in the 2D backlight unit 940 to a light guide plate 950. The 3D backlight unit 920 is deactivated and light is not emitted from the light sources 922 and 924 included in the 3D backlight unit 920.

In an example, output elements that allow light to be directed to exit the light guide plate 950 may be disposed at a lower surface of the light guide plate 950. Unlike the output elements 932, 934, 936, and 938 disposed on the light guide plate 930, the output elements disposed on the light guide plate 950 may transfer uniformly distributed light to the display panel 910. The display panel 910 displays a 2D image based on the light transferred from the 2D backlight unit 940. The light output from the 2D backlight unit 940 may be transferred to the display panel 910 by passing through the light guide plate 930, the output elements 932, 934, 936, and 938, and an air cavity disposed on the 3D backlight unit 920. For this to be possible, the light guide plate 930 and the output elements 932, 934, 936, and 938 may consist of transparent elements.

In an example, the 2D backlight unit 940 further includes a reflection film 946, a diffusion film 948, and a brightness enhancement film (BEF) 926. According to an exemplary embodiment,, the reflection film 946 may reduce an amount of light loss by reflecting light that reaches a lower surface of the light guide plate 950 such that light guided by the light guide plate 950 is not directed to the outside of the light guide plate 950. The diffusion film 948 diffuses light input to the diffusion film 948. The diffusion film 948 may uniformly distribute light. The BEF 926 enhances a brightness of light incident on the BEF 926. Light that passes through the diffusion film 948 and the BEF 926 may reach the display panel 910.

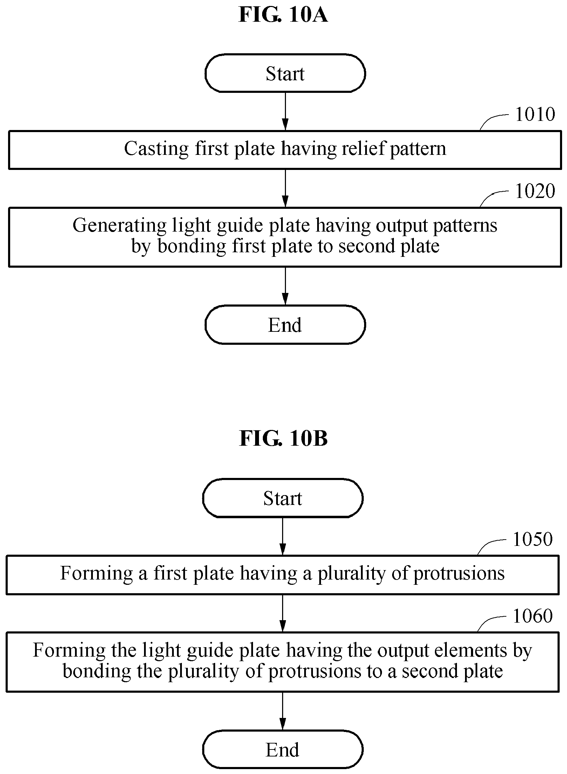

FIG. 10A is a flowchart illustrating a method of manufacturing a light guide plate according to an exemplary embodiment. The light guide plate having output elements described with reference to FIG. 1 through 9B may be easily and simply manufactured based on a manufacturing method to be described below. In operation 1010, a first plate having a relief pattern corresponding to an intaglio pattern of an intaglio mold is cast using the intaglio mold. Here, a cross section of the intaglio pattern and a cross section of the relief pattern may have triangle forms or trapezoid forms, but the forms of the cross sections of the intaglio pattern and the relief pattern are not limited thereto.

In an example, the first plate having the relief pattern may be obtained by pressing and curing the intaglio mold on a resin layer which is cured by heat or ultraviolet rays. In response to the resin layer being pressed with the intaglio mold, the resin layer may have the relief pattern corresponding to the intaglio pattern of the intaglio mold. In response to the resin layer having the relief pattern being cured, the first plate having the relief pattern may be obtained.

In operation 1020, the light guide plate having the output elements is generated by bonding the first plate having the relief pattern to a second plate for guiding light. A cross section of at least one of the output elements to be formed may have an inverse trapezoid form. In an example, when the first plate having the relief pattern is bonded to the flat second plate using the resin layer and then the resin layer is cured, the light guide plate having an air cavity and the output elements may be generated. The air cavity may be formed in a space in which the first plate and the second plate are not bonded to each other. A refractive index of the resin layer may be identical or similar to a refractive index of the second plate used in exemplary embodiments in operations 1010 and 1020.

FIG. 10B is a flowchart illustrating a method of manufacturing a light guide plate according to another exemplary embodiment. The light guide plate having output elements described with reference to FIG. 1 through 9B may be easily and simply manufactured based on a manufacturing method to be described below. In operation 1050, a first plate having a plurality of protrusions may be formed. According to an exemplary embodiment the protrusions may be obtained by pressing and curing the intaglio mold on a resin layer which is cured by heat or ultraviolet rays. In response to the resin layer being pressed with the intaglio mold, the resin layer may have the plurality of protrusions corresponding to the intaglio pattern of the intaglio mold. In response to the resin layer having the plurality of protrusions being cured, the first plate having the plurality of protrusions may be obtained.

In operation 1060, the light guide plate having the output elements is formed by bonding the plurality of protrusions to a second plate. A cross section of at least one of the output elements to be formed may have an inverse trapezoid form. In an example, when the first plate having the plurality of protrusions is bonded to the flat second plate using the resin layer and then the resin layer is cured, the light guide plate having an air cavity and the output elements may be generated. The air cavity may be formed in a space in which the first plate and the second plate are not bonded to each other. A refractive index of the resin layer may be identical or similar to a refractive index of the second plate used in exemplary embodiments in operations 1050 and 1060.

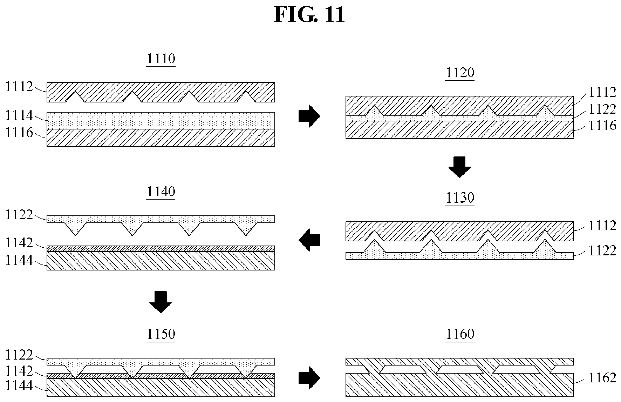

FIG. 11 illustrates an implementation of a method of manufacturing a light guide plate according to an exemplary embodiment. FIG. 11 illustrates an implementation of the method of manufacturing the light guide plate having inverted trapezoidal output elements in a plate structure.

In operation 1110, an intaglio mold 1112 having an intaglio pattern, a basic plate 1116, and a resin layer 1114 are provided. A cross section of the intaglio pattern of the intaglio mold 1112 may have a triangle form or a trapezoid form, but the form of the cross section of the intaglio pattern is not limited thereto. The resin layer 1114 is stacked on the basic plate 1116 and the resin layer 1114 may be cured by heat or ultraviolet rays.

In operation 1120, the intaglio mold 1112 is pressed to the resin layer 1114 and a form of the resin layer 1114 is changed such that the resin layer 1114 has a relief pattern corresponding to the intaglio pattern of the intaglio mold 1112. Subsequently, a resin layer 1122 of which a form is changed is cured and the form of the resin layer 1122 is fixed. The relief pattern may be a triangle form or a trapezoid form based on the form of the intaglio pattern, but the form of the relief pattern is not limited thereto.

In operation 1130, the intaglio mold 1112 is separated from the cured resin layer 1122. The resin layer 1122 corresponds to the first plate having the relief pattern of FIG. 10. The resin layer 1122 may perform a role of a mold used for forming output elements of the light guide plate.

In operation 1140, the resin layer 1122 having the relief pattern, a second plate 1144, and a resin layer 1142 stacked on the second plate 1144 are provided.

In operation 1150, the resin layer 1122 having the relief pattern is pressed to the resin layer 1142 and the resin layer 1142 is cured by heat or ultraviolet rays in a condition in which a form of the resin layer 1142 is changed. When the resin layer 1142 is cured and the form of the resin layer 1142 is fixed, a light guide plate 1162 having output elements and a cross section of at least one of the output elements has an inverse trapezoid form is generated in operation 1160. Entire surfaces of the resin layer 1122 having the relief pattern and the resin layer 1142 are not bonded to each other by the relief pattern. Thus, an air cavity is formed in a space in which the resin layer 1122 is not bonded to the resin layer 1142 by the relief pattern, and the air cavity is formed between the output elements. In an example, the light guide plate 1162 generated based on the aforementioned process may be bonded to a display panel. In this example, a gap between the display panel and each of the output elements is regular such that quality of an image output from the display panel may be enhanced.

The elements or components described herein may be implemented using hardware components, software components, or a combination thereof. For example, the hardware components may include microphones, amplifiers, band-pass filters, audio to digital convertors, and processing devices. A processing device, such as a controller, may be implemented using one or more general-purpose or special purpose computers, such as, for example, a processor, a controller and an ALU, a DSP, a microcomputer, an FPGA, a PLU, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

The foregoing exemplary embodiments are examples and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A three-dimensional (3D) backlight unit, comprising:
at least one light source configured to emit light; and
a light guide plate configured to guide the light emitted by the light source,
wherein the light guide plate comprises output elements directing at least a portion of the light guided by the light guide plate to exit the light guide plate, and a cross section of at least one of the output elements has an inverted trapezoid form.

2. The 3D backlight unit of claim 1, wherein the output elements are configured to direct the portion of the light reflected from a lower surface of the light guide plate to an upper surface of the light guide plate and to exit the light guide plate towards a display panel.

3. The 3D backlight unit of claim 1, wherein the portion of the light directed to exit the light guide plate by the output elements is reflected by a side surface of each of the output elements.

4. The 3D backlight unit of claim 1, wherein an upper surface of the light guide plate at which a Total Internal Reflection (TIR) occurs and a lower surface of each of the output elements are disposed on an identical plane.

5. The 3D backlight unit of claim 1, wherein an upper surface of each of the output elements has a rectangle form, a trapezoid form or a parallelogram form.

6. The 3D backlight unit of claim 1, wherein an air cavity is disposed between adjacent output elements among the output elements.

7. The 3D backlight unit of claim 6, wherein the light guided by the light guide plate is guided by a Total Internal Reflection (TIR) occurring between a lower surface of the air cavity and a lower surface of the light guide plate.

8. The 3D backlight unit of claim 6, wherein a permittivity of the air cavity is less than a permittivity of the light guide plate.

9. The 3D backlight unit of claim 1, wherein the portion of the light directed to exit the light guide plate by the output elements forms a light pattern having a first area in which the portion of the light is present and a second area in which the portion of the light is absent which areas are alternately repeated.

10. The 3D backlight unit of claim 1, wherein the output elements are spaced apart from each other and form a plurality of output pattern columns disposed in a line form and in particular
each of the output pattern columns comprises two or more independent output elements, among the output elements, that allow incident light to be directed to exit the light guide plate.

11. The 3D backlight unit of claim 10, wherein the output pattern columns are disposed in a slanted form in the light guide plate.

12. The 3D backlight unit of claim 1, wherein an amount of the portion of the light directed to exit the light guide plate is determined based on an area of a lower surface of each of the output elements.

13. The 3D backlight unit of claim 1, wherein the light source comprises:
a first light source configured to emit the light toward one side of the light guide plate; and
a second light source configured to emit the light toward another side of the light guide plate.

14. A display apparatus comprising:
a display panel;
a first backlight unit according to one of the claims 1 to 13 configured to output first light for displaying a three-dimensional (3D) image to the display panel in a 3D display mode; and
a second backlight unit configured to output second light for displaying a two-dimensional (2D) image to the display panel in a 2D display mode,
wherein the first backlight unit is configured to output the first light for displaying the 3D image through output elements.

15. The display apparatus of claim 14, wherein light output from the second backlight unit reaches the display panel by passing through the output elements and the light guide plate included in the first backlight unit.

16. The display apparatus of claim 14, wherein the display panel is spaced apart from the first backlight unit or is optically bonded to the first backlight unit.

17. The display apparatus of claim 14, further comprising:
a controller configured to control operations of light sources included in the first backlight unit and the second backlight unit based on a display mode of the display apparatus.

18. A method of manufacturing a light guide plate, the method comprising:
forming a first plate having an initial pattern or a plurality of protrusions; and
forming a light guide plate having output elements by bonding the initial pattern or protrusions of the first plate to a second plate,
wherein the output elements allow a portion of the guided light to exit light guide plate and wherein a cross section of at least one of the output elements has an inverted trapezoid form.

19. The method of claim 18, wherein a cross section of the initial pattern or protrusions has a triangle form or a trapezoid form.

20. The method of claim 18, further comprising: forming an air cavity in a space in which the first plate and the second plate are not bonded and/or between adjacent protrusions among the plurality the protrusions.

21. The method of claim 18, wherein the forming the first plate further comprises casting, using an intaglio mold, the first plate having the initial pattern corresponding to an intaglio pattern of the intaglio mold.

22. A light guide plate comprising:
a lower portion configured to guide the light; and
an upper portion comprising a plurality of protrusions bonded to the lower portion, the plurality of protrusions configured to allow a portion of the light guided by the lower portion to exit light guide plate, and a cross section of at least one of the plurality of protrusions having an inverted trapezoid form, wherein preferably
the plurality of protrusions are formed at uniform intervals and/or
at least one of the plurality of protrusions is an inverted trapezoidal prism.

23. The light guide plate according to claim 22, wherein air cavity are formed between adjacent protrusions among the plurality the protrusions.

24. The method of manufacturing the light guide plate according to claim 18, further comprising:
forming the plurality of protrusions at uniform intervals.
